# EUROPEAN PATENT SPECIFICATION

(11) **EP 1 838 129 B1**
(45) Date of publication and mention of the grant of the patent: **19.05.2010**
(21) Application number: 07005959.7
(22) Date of filing: 22.03.2007
(51) Int. Cl.: H04Q 11/00, H04L 12/46

(54) **Method for configuring native VLAN and processing ethernet messages for a GPON system**
Verfahren zur Konfiguration eines nativen VLANs und zur Verarbeitung von Ethernet-Nachrichten für ein GPON-System
Procédé de configuration de réseau local virtuel (vlan) natif et de traitement de messages Ethernet pour un système GPON

(30) Priority: 22.03.2006 CN 200610034630
(43) Date of publication of application: 26.09.2007
(73) Proprietor: Huawei Technologies Co., Ltd., Shenzhen, Guangdong Province 518129 (CN)
(72) Inventor: Yang, Sulin, Huawei Technologies Co., Ltd., Shenzhen, Guangdong Prov. 518129 (CN); Zheng, Gang, Huawei Technologies Co., Ltd., Shenzhen, Guangdong Prov. 518129 (CN)
(74) Representative: Epping - Hermann - Fischer

(56) References cited:
- "B-PON OMCI support for IP, ISDN, video, VLAN tagging, VC cross-connections and other select functions; G.983.8 (03/03)" ITU-T STANDARD WITHDRAWN (W), INTERNATIONAL TELECOMMUNICATION UNION, GENEVA, CH, no. G.983.8 (03/03), 16 March 2003 (2003-03-16), XP017404676
- NIU LEHONG HUAWEI TECHNOLOGIES CO ET AL: "Proposal of GPON in support of 802.1ad; D 578" ITU-T DRAFT STUDY PERIOD 2005-2008, INTERNATIONAL TELECOMMUNICATION UNION, GENEVA ; CH, vol. STUDY GROUP 15, 6 February 2006 (2006-02-06), pages 1-3, XP017407693
- "Gigabit-capable Passive Optical Networks (G-PON): ONT management and control interface specification; G.984.4 (06/04)" ITU-T STANDARD IN FORCE (I), INTERNATIONAL TELECOMMUNICATION UNION, GENEVA, CH, no. G.984.4 (06/04), 13 June 2004 (2004-06-13), XP017401197
- IWATA A ET AL: "GLOBAL OPEN ETHERNET ARCHITECTURE FOR A COST-EFFECTIVE SCALABLE VPN SOLUTION" IEICE TRANSACTIONS ON COMMUNICATIONS, COMMUNICATIONS SOCIETY, TOKYO, JP, vol. E87-B, no. 1, 1 January 2004 (2004-01-01), pages 142-151, XP001541242 ISSN: 0916-8516

## Description

### CROSS-REFERENCE TO RELATED APPLICATIONS

This application is claiming priority of Chinese Application No. 200610034630.6 filed March 22, 2006, entitled "Method for Configuring Native VLAN and Processing Ethernet Messages for a GPON System".

### BACKGROUND

The present disclosure relates to Passive Optical Network (PON) technologies, and more particularly to a method for an Optical Network Terminal (ONT) to handle Ethernet frames.

Broadband access technology consists of copper (e.g. Digital Subscriber Loop (DSL)) and fiber technology. The access network achieved through fiber technology is an optical access network (OAN).

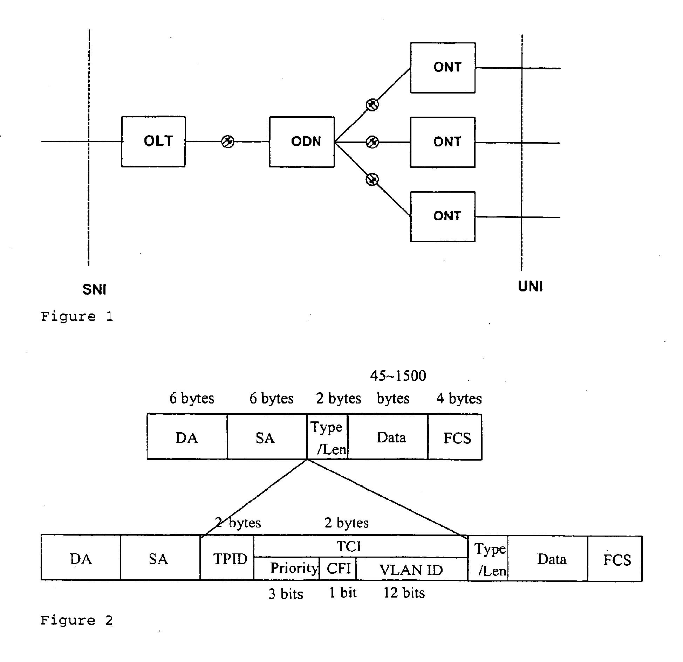

Within the OAN, the Passive Optical Network (PON) is a point to multipoint technology, as depicted in FIG. 1.

Optical Line Terminal (OLT): An OLT provides the network-side interface for the OAN and is connected to one or more ODNs.

Optical Distribution Network (ODN): An ODN carries the optical transmission from the OLT to the users and vice versa. It utilizes passive optical components.

Optical Network Unit (ONU): An ONU provides, directly or remotely, the user-side interface of the OAN and is connected to the ODN.

Optical Network Terminal (ONT): An ONT is an ONU used for fiber to the home (FTTH) that includes a User Port function, such as an Ethernet or a Plain Old Telephone Service (POTS) interface. Without pointing out specifics, the ONT is used as the description of the ONT and the ONU in the rest of this disclosure.

A Gigabit Passive Optical Network (GPON), which is defined in the ITU-T standards G.984.1, G.984.2, G.984.3, and G.984.4, has more valuable features, such as the capability for carrying time division multiplexed (TDM) services in the native mode and high efficiency encapsulation. In the GPON standard, an interface called an ONU Management and Control Interface (OMCI) is defined, which is created between the ONT and the OLT by the OLT during ONT activation. Through the OMCI, the OLT can manage and configure the ONT. The OMCI is a master-slave management protocol: the OLT is the master and ONT is the slave. The OLT can manage and configure additional connected ONTs through the OMCI channel.

The OMCI protocol runs between the OLT controller and the ONT controller that is established at ONT initialization. The OMCI protocol is asymmetric: the controller in the OLT is the master and the controller in the ONT is the slave. A single OLT controller using multiple instances of the protocol over separate control channels may control multiple ONTs.

A protocol-independent Management Information Base (MIB) is used to describe the exchange of information across the OMCI and forms the basis from which protocol-specific models (e.g. Simple Device Protocol for the ONT) are defined. The protocol-independent MIB presented in ITU-T Rec. G.984.4 has been defined in terms of managed entities. The managed entities are abstract representations of resources and services in an ONT.

Within a Local Area Network (LAN), a Virtual Local Area Network (VLAN), which is defined in IEEE 802.1Q, can be used to separate user traffic from prohibited broadcast domains. An IEEE 802.1Q bridge can attach a VLAN Tag to a received Ethernet frame. A VLAN Tagged Ethernet frame is depicted in FIG. 2. The value of the Tag Protocol Identity (TPID) is 0x8100, and the value of (Tag Control Information (TCI) is determined by the policy for an Ethernet port to attach the VLAN ID.

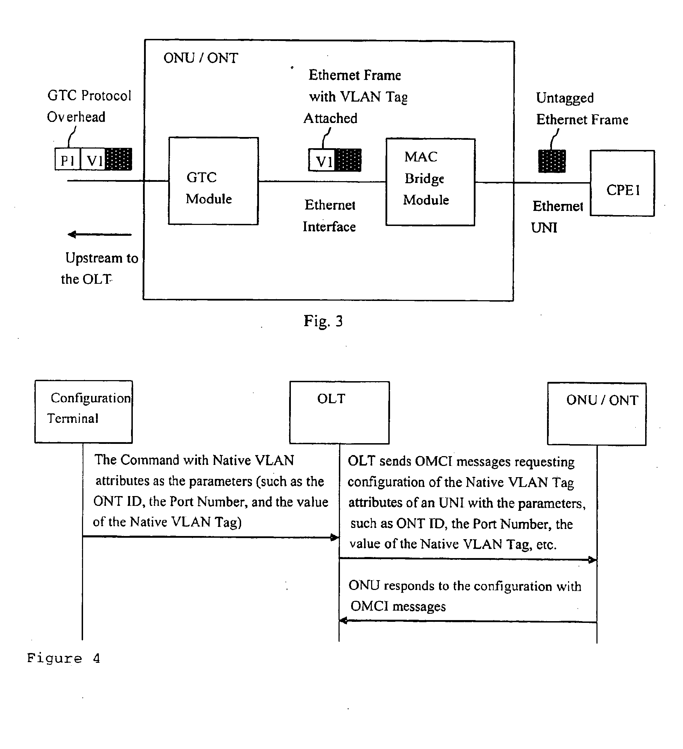

In a GPON system, in order to separate traffic by different users or by different services, different VLAN Tags are allocated to the different users or the different services. For example, the ONT can attach VLAN tags to the user's data frames based on the Ethernet port. The procedure of the ONT attaching the VLAN tag is depicted in FIG. 3. First, the ONT receives untagged frames from the user network interface (UNI). Then, the ONT media access control (MAC) bridge module attaches a VLAN tag to the received untagged frames and sends them to the Gigabit PON (GPON) Transmission Convergence (GTC) module through an internal interface. Finally, the ONT's GTC module encapsulates the frames tagged by the MAC bridge module into a GPON frame and sends them to the OLT.

Some customer devices, such as those that connect to the ONT UNI, support VLAN tagging (e.g. Integrity Access Device (IAD), while some other customer devices do not support VLAN tagging (e.g. personal computers (PCs)), and an ONT's UNI may be connected to a plurality of customer premise equipment (CPE). When a UNI connects to multiple customer devices, each of them attaches different VLAN tags, some of which do not support VLAN tagging, then a native VLAN parameter should be configured to this UNI. A UNI with Native VLAN attributes will set a default VLAN tag. The UNI with native VLAN attributes will attach the default VLAN tag to the untagged frame from the CPE. If the VLAN tagged frames are received, the UNI with the Native VLAN attributes will transmit the frame from the CPE without any treatment. In the downstream direction, the UNI with the native VLAN attributes will remove the VLAN tag, which is identical to the default VLAN tag, from the downstream frames and will transparently transmit the downstream frame with the other VLAN tags to the CPE.

Through the Native VLAN attributes, the VLAN Tag mismatch can be resolved in multiple interconnected devices. Furthermore, when one UNI connects multiple devices, whether or not the VLAN Tagging operation is supported, the UNI can also keep user or traffic isolation.

In GPON standards, the definition of a VLAN Tagging Configuration Data managed entity (ME) is as follows.

VLAN Tagging Operation Configuration Data This managed entity is used to organize the data associated with VLAN tagging. Instances of this managed entity are created and/or deleted at the request of the OLT.

### Relationship

Zero or one instance of this managed entity may exist for each instance of the Physical Path Termination Point Ethernet UNI.

### Attributes

Managed Entity ID: This attribute provides a unique number for each instance of this managed entity. The assigned number is the same as the ID of the Physical Path Termination Point Ethernet UNI with which this VLAN Tagging Operation Configuration Data instance is associated. (R, Set-by-create) (mandatory) (2 bytes)

Upstream VLAN Tagging Operation Mode: This attribute selects whether or not upstream VLAN tagging is sent.

Valid values are 0x00 (upstream frame is sent "as is," regardless of whether or not the received frame is tagged);
0x01 (The upstream frame is sent as tagged whether or not the received frame is tagged. The TCI, consisting of the VLAN identifier (VID), the Canonical Format Indicator (CFI), and the user priority, is attached or overwritten by using the Upstream VLAN Tag TCI Value); and
0x02 (The upstream frame is sent as tagged whether or not the received frame is tagged. If the received frame is tagged, a second tag (Q-n-Q) is added to the frame. If the received frame is not tagged, a tag is attached to the frame. The TCI, consisting of the VID, the CFI, and the user priority, is attached or added by using the Upstream VLAN Tag TCI Value). (R, W, Set-by-create) (mandatory) (1 byte)

Upstream VLAN Tag TCI Value: This attribute indicates the TCI value for upstream VLAN tagging. It is used when the Upstream VLAN Tagging Operation Mode is 0x01. Any 2-byte value is acceptable. (R, W, Set-by-create) (mandatory) (2 bytes)

Downstream VLAN Tagging Operation Mode: This attribute selects whether or not downstream VLAN tagging is sent. Valid values are 0x00 (downstream frame is sent "as is," regardless of whether or not the received frame is tagged) and 0x01 (The downstream frame is sent as untagged whether or not the received frame is tagged). (R, W, Set-by-create) (mandatory) (1 byte)

According to the definition, when the attribute 'Upstream VLAN Tagging Operation Mode' is 0x01, the untagged frame is attached to a VLAN tag configured in the attribute 'Upstream VLAN Tag TCI Value' and the VLAN Tag in the single tagged frame is replaced by the 'Upstream VLAN Tag TCI Value'. That is to say, all of the upstream frames have the same VLAN Tag.

VLAN Tagging Operation Configuration Data ME does not define the operation mode of the Native VLAN. The upstream operation mode (0x01) cannot discriminate multiple users or services when multiple types of Ethernet frames (untagged, single tagged) arrive at the UNI. The upstream operation mode (0x00) is a transparent mode, which cannot attach the VLAN tag to the untagged upstream frames. Therefore, in current standards, the ONT cannot provide the capability for one UNI connecting multiple customers or multiple types of CPE (each type of CPE provides one service, that is to say adds a different VLAN Tag) of one user. Also, each ONT UNI cannot provide the ability to connect supporting VLAN Tagging devices, and does not support VLAN Tagging devices, and provides users or services separation simultaneously.

Document "B-PON OMCI support for IP, ISDN, video, VLAN tagging, VC cross-connections and other selected functions; G.983.8 (03/03)", XP017404676, provides ONT Management and Control Interface (OMCI) support for the Broadband Passive Optical Network (B-PON) system defined in ITU-T Rec.G983.1[1] for select functions which were out of the scope of ITU-T Rec.G983.2[2]. OMCI support is specified for Internet Protocol (IP) Router functionality on Local Area Network (LAN) cards, Integrated Services Digital Network (ISDN) interfaces, additional Ethernet performance monitoring, video interfaces, virtual LAN (VLAN) tagging, extended Media Access Control (MAC) Bridge Filtering, local craft terminal interfaces, Virtual. Channel (VC) cross-connections, and Optical Network Units (ONUs). Document "Proposal of GPON in support of 802.1ad; D578", XP017407693, introduces requirements for GPON system in support of IEEE 802.1ad technology on ONT and relevant Management aspect through the OLT using the ONT management and control interface (OMCI).

### SUMMARY

An embodiment of the present disclosure provides a method for the ONT to handle Ethernet frames, to solve the problem that an ONT UNI needs to separate users or services and connect multiple users or multiple CPE of one user.

The embodiment of the present disclosure provides a method for Native VLAN configuration in GPON, comprising: sending a Native VLAN configuration command to terminal; and storing a Native VLAN attribute in a VLAN tag operation configuration data management entity and returning a configuration response message by the ONT, wherein, when an UNI configured with Native VLAN attributes receives Ethernet frames from connected devices, a VLAN tag in the Native VLAN attribute is added to untagged frames and VLAN tagged frames are forwarded directly by a MAC bridge module; when an UNI configured with the Native VLAN attributes receives downstream Ethernet frames, the VLAN tag is removed for the frames with the VLAN tag equivalent with the value in the Native VLAN attribute before the frames are sent to connected devices by the MAC bridge module, and the frames with the VLAN tag different with the value in the Native VLAN attribute are forwarded directly by the MAC bridge module. An embodiment of the present disclosure also provides a method for the ONT to handle Ethernet frames, the method comprises: the ONT receiving an Ethernet message from an User Network Interface (UNI), and, if the Ethernet message does not contain a VLAN tag, adding a VLAN tag specified in the Native VLAN attribute of the UNI to the Ethernet message before forwarding the Ethernet message to a Gigabit Passive Optical Network (GPON) protocol processing module; otherwise, forwarding the Ethernet message to the GPON protocol processing module directly; and the ONT receiving the Ethernet message with the VLAN tag from the GPON protocol processing module and, if the VLAN tag of the Ethernet message is the same as that specified in the Native VLAN attribute of the UNI for the Ethernet message, removing the VLAN tag of the Ethernet message before forwarding the Ethernet message to the equipment connected to the UNI for the Ethernet message; otherwise, forwarding the Ethernet message to the equipment connected to the UNI for the Ethernet message.

In the embodiment of the present disclosure, by defining Native VLAN operation mode in the VLAN tagging operation configuration Data ME, the problem that an ONT UNI cannot connect multiple CPEs with different VLAN characteristics is solved. That is, a UNI can connect multiple CPEs with different VLAN characteristics and the multiple CPEs can be identified by the Native VLAN tag. Therefore, the embodiment of the present disclosure can reduce the capital expenditures (CAPEX) for the layout of GPON system.

### BRIEF DESCRIPTION OF THE DRAWINGS

FIG. 1 is a diagram illustrating one embodiment of the structure of the PON.
FIG. 2 is a diagram illustrating one embodiment of the structure of the VLAN tagged Ethernet frame.
FIG. 3 is a diagram illustrating one embodiment of the transforming of VLAN tagged Ethernet frames.
FIG. 4 is a flowchart of one embodiment of a Configuration Terminal configuring the Native VLAN attributes of an ONT UNI through the OLT.
FIG. 5 shows one embodiment of the ONT handling the Ethernet frames from the UNI side with the Native VLAN tagging operation.
FIG. 6 is a flowchart of one embodiment of the MAC bridge module within the ONT handling the upstream frames from the UNI which is configured with Native VLAN attributes.
FIG. 7 shows one embodiment of the ONT handling the downstream frames with Native VLAN tagging operation.
FIG. 8 is a flowchart of one embodiment of the MAC bridge module within ONT handling the downstream frames to customer devices through a Native VLAN configured UNI.

### DETAILED DESCRIPTION

Embodiments of the present disclosure will be described hereinafter with reference to the accompanying drawings.

One of the fundamental parts of the embodiment of the present disclosure is to add newly configurable Native VLAN attribute to the VLAN Tagging Operation Configuration Data ME. When an UNI with Native VLAN attributes receives Ethernet frames from the connected devices, the MAC bridge module will add a VLAN tag in the Native VLAN attribute to untagged frames and transform only the VLAN tagged frames. When an UNI with the Native VLAN attributes receives downstream Ethernet frames, the MAC bridge module removes the VLAN tag for the frames with the VLAN tag equivalent with the value in the Native VLAN tag attribute before sending it to connected devices, and directly transforms the frames with the VLAN tag different with the value in the Native VLAN tag attribute.

The following is the detailed description of the VLAN Tagging Operation Configuration Data ME.

The VLAN tagging operation configuration Data ME in the embodiment of the present disclosure that support Native VLAN attribute is:
Managed Entity: VLAN Tagging Operation Configuration Data
Relationship: Zero or one instance of this managed entity may exist for each instance of Physical Path Termination Point Ethernet UNI.

### Attributes:

Managed Entity ID: This attribute provides a unique number for each instance of this managed entity. The assigned number is the same as the ID of the Physical Path Termination Point Ethernet UNI with which this VLAN Tagging Operation Configuration Data instance is associated. (R, Set-by-create) (mandatory) (2 bytes) Upstream VLAN Tagging Operation Mode: This attribute selects whether or not the upstream VLAN tagging is sent.

Valid values are 0x00 (upstream frame is sent "as is," regardless of whether or not the received frame is tagged);
0x01 (The upstream frame is sent as tagged whether or not the received frame is tagged. The TCI, consisting of the VID, the CFI, and the user priority, is attached or overwritten by using the Upstream VLAN Tag TCI Value); and
0x02 (The upstream frame is sent as tagged whether or not the received frame is tagged. If the received frame is tagged, a second tag (Q-n-Q) is added to the frame. If the received frame is not tagged, a tag is attached to the frame. The TCI, consisting of the VID, the CFI, and the user priority, is attached or added by using the Upstream VLAN Tag TCI Value); and
0x03 (The untagged upstream frame is sent as tagged, TCI, is attached by using the Upstream VLAN Tag TCI Value, while VLAN tagged upstream is sent transparently).
(R, W, Set-by-create) (mandatory) (1 byte)

Upstream VLAN Tag TCI Value: This attribute indicates the TCI value for upstream VLAN tagging. It is used when the Upstream VLAN Tagging Operation Mode is 0x01. Any 2-byte value is acceptable. (R, W, Set-by-create) (mandatory) (2 bytes)

Downstream VLAN Tagging Operation Mode: This attribute selects whether or not downstream VLAN tagging is sent. Valid values are 0x00 (downstream frame is sent "as is," regardless of whether or not the received frame is tagged), 0x01 (The downstream frame is sent as untagged whether or not the received frame is tagged), and 0x02 (If the downstream frame has the VLAN tag equivalent with Upstream VLAN Tag TCI Value, it is sent as untagged, otherwise it is sent transparently). (R, W, Set-by-create) (mandatory) (1 byte)

Wherein, add "mode 0x03 (The untagged upstream frame is sent as tagged, TCI, is attached by using the Upstream VLAN Tag TCI Value, while VLAN tagged upstream is sent transparently.)" to Upstream VLAN Tagging Operation Mode attribute and "mode 0x02 (If the downstream frame has the VLAN tag equivalent with Upstream VLAN Tag TCI Value, it is sent as untagged, otherwise it is sent transparently)" to the Downstream VLAN Tagging Operation Mode.

The flowchart that a configuration terminal uses to configure an UNI with Native VLAN attributes through the ONT is depicted in FIG. 4.

Step 1: The configuration terminal sends a Native VLAN configuration command that includes such parameters as ONT identity, port number of the UNI which need to configure the Native VLAN attributes, and the value of Native VLAN Tag.

Step 2: The OLT sends OMCI messages to the ONT requesting the ONT to configure the Native VLAN attributes of an ONT. The OMCI messages include the parameters, such as ONT identity, port number of the UNI which needs to configure the Native VLAN attributes, and the value of Native VLAN Tag.

Step 3: The ONT stores the Native VLAN attributes in the VLAN Tagging Operation Configuration Data ME for the corresponding UNI and responds with an OMCI message.

Besides the above approach, the configuration terminal can also directly (e.g. through a universal asynchronous receiver/transmitter (UART)) or remotely (e.g. through Telnet) send the command to the ONT to configure the Native VLAN attribute. The ONT stores the parameters in the command in the VLAN Tagging Operation Configuration Data ME of the corresponding.

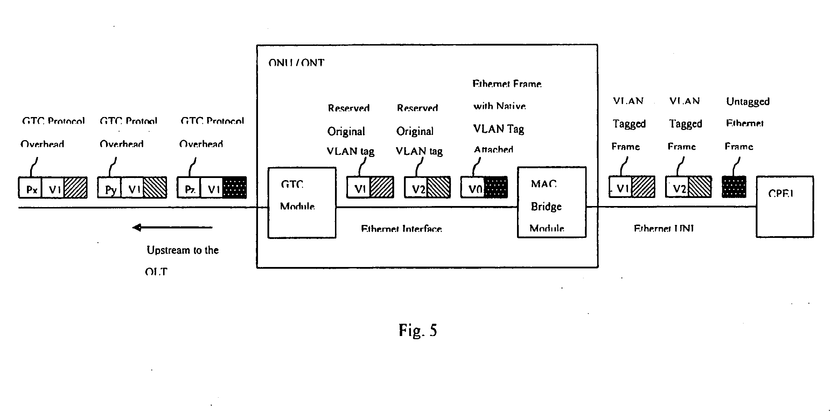

After the configuration above, the ONT can handle the received frames according to the Native VLAN attributes of the corresponding UNI, which is depicted in FIG. 5.

When the frames are received, the MAC Bridge module within the ONT checks the frame structure, directly sends the frames that already have VLAN tags (e.g. the frames with VLAN Tag V1 and V2), and attaches a VLAN tag with the value configured in the Upstream VLAN Tag TCI Value attribute (e.g. V0) to the untagged frames. After that, the frames with different VLAN tags will be sent to the GTC module through internal Ethernet interface. Finally, GTC module will do some operation, such as attaching the necessary protocol overhead to form the GPON frames and sent the GPON frames to the OLT.

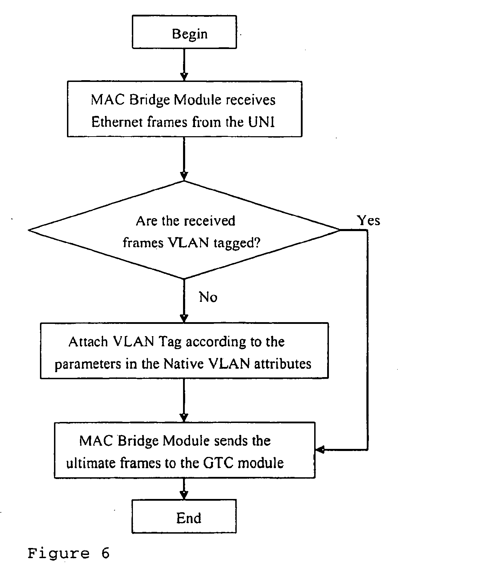

FIG. 6 provides the flowchart for how the MAC bridge module within the ONT deals with the received frame from the UNI with Native VLAN attributes:
Step 1: The MAC bridge module receives the upstream frames from the UNI with Native VLAN attributes configured UNI;
Step 2: The MAC bridge module checks whether the frames are VLAN tagged or not, if the frames are VLAN tagged, the flow goes to step 4; otherwise the flow goes to step 3;
Step 3: The MAC bridge module attaches a VLAN tag designated in the Native VLAN attributes of the UNI to the untagged frames;
Step 4: The MAC bridge module transforms the frames (Native VLAN Tagged or not) to the GTC module through the internal interface;
Step 5: The GTC module does some necessary operation, such as attaching a GTC protocol overhead to form GTC frames, and sends the GTC frames to the OLT.

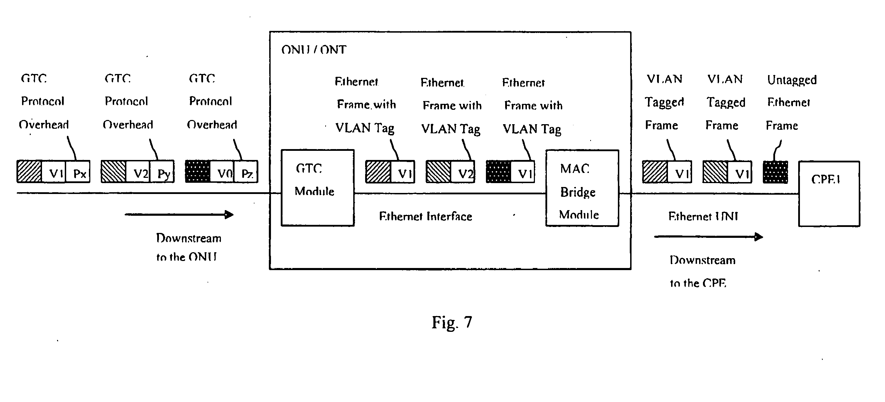

FIG. 7 shows how the ONT handles the downstream frames to an UNI with Native VLAN configured from the GTC module:

The GTC module receives the GTC frames from the OLT, removes the necessary GTC protocol overheads, and sends the produced Ethernet frames with the VLAN tags to the MAC bridge module through internal interface. After receiving the downstream VLAN tagged frames, the MAC bridge module first compares the VLAN tag in the frames with the Upstream VLAN Tag TCI Value in the VLAN Tagging Operation Configuration Data ME of the UNI to the destination of the received downstream frames. If they are different from each other, the MAC bridge module directly sends the received downstream VLAN tagged frames to the connected customer devices (e.g. the frames with VLAN tag V1 and V2) through the UNI. If they are same, the MAC bridge module removes the VLAN tag from the received downstream VLAN tagged frames (e.g. the frames with VLAN tag V0), and sends the ultimate untagged frames to the connected customer devices through the UNI.

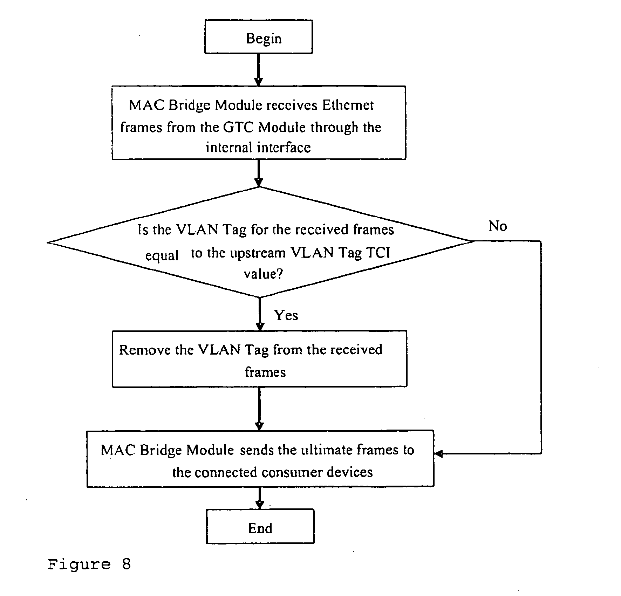

The procedure that the MAC bridge module within the ONT uses to handle the received downstream frames to a Native VLAN attribute configured UNI from the GTC module through the internal interface is represented in FIG. 8:
Step 1: the MAC bridge module within the ONT received downstream frames to a Native VLAN attribute configured UNI from the GTC module through the internal interface;
Step 2: The MAC bridge module within the ONT compares the VLAN tag of the received downstream frames with the attribute Upstream VLAN Tag TCI Value in the VLAN Tagging Operation Configuration Data ME of the UNI to the destination of the received downstream frames. If they are same, the flow goes to step 3; otherwise, the flow goes to step 4;
Step 3: The MAC bridge module removes the VLAN tag of the received downstream frames which is equal to the attribute Upstream VLAN Tag TCI Value in the VLAN Tagging Operation Configuration Data ME; and
Step 4: The MAC bridge module sends the ultimate frames to the connected customer devices through the corresponding UNI.

The foregoing descriptions are only preferred embodiments of the present disclosure and not used for limiting the protection scope thereof.

## Claims

1. A method for configuring a Native Virtual Local Area Network for a Gigabit Passive Optical Network, GPON, system, comprising:
sending a Native Virtual Local Area Network configuration command to an optical network terminal by a configuration terminal; and
storing at least one Native Virtual Local Area Network attribute in a Virtual Local Area Network tag operation configuration data management entity and returning a configuration response message by the optical network terminal, wherein,
when a user network interface, UNI, configured with Native Virtual Local Area Network attributes receives Ethernet frames from connected devices, a Virtual Local Area Network tag in the Native Virtual Local Area Network attribute is added to untagged frames and Virtual Local Area Network tagged frames are forwarded directly by a media access control, MAC, bridge module; when a user network interface, UNI, configured with Native Virtual Local Area Network attributes receives downstream Ethernet frames, the Virtual Local Area Network tag is removed for the frames with the Virtual Local Area Network tag equivalent with the value in the Native Virtual Local Area Network attribute before the frames are sent to connected
devices by the MAC bridge module, and the frames with the Virtual Local Area Network tag different from the value in the Native Virtual Local Area Network attribute are forwarded directly by the MAC bridge module.

2. The method of claim 1, wherein the Native Virtual Local Area Network configuration command comprises an optical network terminal identity, a port number of a user network interface, UNI, that needs to be configured the Native Virtual Local Area Network attribute, and a Native Virtual Local Area Network tag.

3. The method according to one of the previous claims, wherein the Native Virtual Local Area Network attribute indicates that a pre-configured Virtual Local Area Network tag will be set for an Ethernet port configured with the Native Virtual Local Area Network attribute.

4. The method according to one of the previous claims, further comprising:
sending, by the configuration terminal, the Native Virtual Local Area Network configuration command to an Optical Line Terminal, OLT, the Native Virtual Local Area Network configuration command comprising the optical network terminal identity, the port number of the user network interface, UNI, that needs to configure the Native Virtual Local Area Network attribute, and the Native Virtual Local Area Network tag; and
sending an optical network terminal configuration request message, by the Optical Line Terminal, OLT, through an optical network terminal management control interface channel, wherein the optical network terminal configuration request message comprises the optical network terminal identity, the port number of the user network interface, UNI, that needs to configure the Native Virtual Local Area Network attribute, and the Native Virtual Local Area Network tag.

5. The method according to one of the previous claims, further comprising:
sending the Native Virtual Local Area Network configuration command to the optical network terminal, wherein the Native Virtual Local Area Network configuration command comprises the optical network terminal identity, the port number of the user network interface, UNI, that needs to be configured the Native Virtual Local Area Network attribute, and the Native Virtual Local Area Network tag.

6. A method for optical network terminal processing of Ethernet messages, comprising:
the optical network terminal receiving an Ethernet message from an User Network Interface, UNI, and, if the Ethernet message does not contain a Virtual Local. Area Network tag, adding a Virtual Local Area Network tag specified in the Native Virtual Local Area Network attribute of the user network interface, UNI, to the Ethernet message before forwarding the Ethernet message to a Gigabit Passive Optical Network protocol processing module; otherwise, forwarding the Ethernet message to the Gigabit Passive Optical Network protocol processing module directly; and the optical network terminal receiving the Ethernet message with the Virtual Local Area Network tag from the Gigabit Passive Optical Network protocol processing module and, if the Virtual Local Area Network tag of the Ethernet message is the same as that specified in the Native Virtual Local Area Network attribute of the user network interface, UNI, for the Ethernet message, removing the Virtual Local Area Network tag of the Ethernet message before forwarding the Ethernet message to the equipment connected to the user network interface, UNI; otherwise, forwarding the Ethernet message to the equipment connected to the user network interface, UNI directly.

7. The method according to claim 6, further comprising:
the configuration terminal configuring the user network interface, UNI, with the Native Virtual Local Area Network.

8. The method according to one of claims 6 to 7, further comprising:
the optical network terminal determining, upon receiving the Ethernet message from the user network interface, UNI, whether the Ethernet message carries the Virtual Local Area Network tag, if the Ethernet message carries the Virtual Local Area Network tag, a medium access control bridge module in the optical network terminal forwarding the Ethernet message; otherwise, the medium access control bridge module in the optical network terminal adding the Virtual Local Area Network tag specified in the Native Virtual Local Area Network attribute of the user network interface, UNI, which receives the Ethernet message, to the Ethernet message; and
the medium access control bridge module sending the Ethernet message with the same and/or different Virtual Local Area Network tag to the Gigabit Passive Optical Network protocol processing module via the integrated Ethernet port and the Gigabit Passive Optical Network protocol processing module adding the necessary Gigabit Passive Optical Network protocol header information to the received Ethernet message, generating a Gigabit Passive Optical Network frame and sending it to the Optical Line Terminal, OLT.

9. The method according to one of claims 6 to 8, further comprising:
the Gigabit Passive Optical Network protocol processing module removing the Gigabit Passive Optical Network protocol header information upon receiving the service message from the Optical Line Terminal, OLT, sending the original Ethernet message with the Virtual Local Area Network tag to the medium access control bridge module of the optical network terminal via the integrated Ethernet port, the medium access control bridge module of the optical network terminal comparing the Virtual Local Area Network tag of the received Ethernet message with the Virtual Local Area Network tag specified in the Native Virtual Local Area Network property of the user network interface, UNI for the Ethernet message, and, if the two tags are not the same, directly forwarding the Ethernet message to the equipment connected to the user network interface, UNI, for the Ethernet message and, if otherwise, removing the Virtual Local Area Network tag of the Ethernet message before sending it to the equipment connected to the user network interface, UNI, for the Ethernet message.

## Patentansprüche

1. Verfahren zum Konfigurieren eines Nativen Virtuellen Lokalen Netzwerks für ein System des Gigabit Passive Optical Network GPON mit den folgenden Schritten:
Senden eines Konfigurationsbefehls des Nativen Virtuellen Lokalen Netzwerks zu einem optischen Netzwerkendgerät durch ein Konfigurationsendgerät; und
Speichern mindestens eines Attributs des Nativen Virtuellen Lokalen Netzwerks in einer Tag-Operationskonfigurationsdaten-Verwaltungsentität des Virtuellen Lokalen Netzwerks und Zurückgeben einer Konfigurationsantwortnachricht durch das optische Netzwerkendgerät, wobei
wenn eine mit Attributen des Nativen Virtuellen Lokalen Netzwerks konfigurierte Benutzernetzwerkschnittstelle UNI Ethernet-Rahmen von verbundenen Einrichtungen empfängt, ein Tag des Virtuellen Lokalen Netzwerks in dem Attribut des Nativen Virtuellen Lokalen Netzwerks zu nicht mit Tag versehenen Rahmen hinzugefügt wird und mit Tag versehene Rahmen des virtuellen lokalen Netzwerks direkt durch ein Brückenmodul der Medienzugangskontrolle MAC weitergeleitet werden; wenn eine mit Attributen des Nativen Virtuellen Lokalen Netzwerks konfigurierte Benutzernetzwerkschnittstelle UNI downstream-Ethernet-Rahmen empfängt, das Tag des Virtuellen Lokalen Netzwerks für die Rahmen mit dem Tag des Virtuellen Lokalen Netzwerks äquivalent mit dem Wert in dem Attribut des Nativen Virtuellen Lokalen Netzwerks entfernt wird, bevor die Rahmen durch das MAC-Brückenmodul zu verbundenen Einrichtungen gesendet werden, und die Rahmen mit dem von dem Wert in dem Attribut des Nativen Virtuellen Lokalen Netzwerks verschiedenen Tag des virtuellen lokalen Netzwerks direkt durch das MAC-Brückenmodul weitergeleitet werden.

2. Verfahren nach Anspruch 1, wobei der Konfigurationsbefehl des Nativen Virtuellen Lokalen Netzwerks Folgendes umfasst: eine Identität des optischen Netzwerkendgeräts, eine Portnummer einer Benutzernetzwerkschnittstelle UNI, die mit dem Attribut des Nativen Virtuellen Lokalen Netzwerks konfiguriert werden muss, und ein Tag des Nativen Virtuellen Lokalen Netzwerks.

3. Verfahren nach einem der vorhergehenden Ansprüche, wobei das Attribut des Nativen Virtuellen Lokalen Netzwerks angibt, dass für einen mit dem Attribut des Nativen Virtuellen Lokalen Netzwerks konfigurierten Ethernet-Port ein vorkonfiguriertes Tag des Nativen Virtuellen Lokalen Netzwerks gesetzt wird.

4. Verfahren nach einem der vorhergehenden Ansprüche, ferner mit den folgenden Schritten:
Senden des Konfigurationsbefehls des Nativen Virtuellen Lokalen Netzwerks durch das Konfigurationsendgerät zu einem Optischen Leitungsendgerät OLT, wobei der Konfigurationsbefehl des Nativen Virtuellen Lokalen Netzwerks Folgendes umfasst: die Identität des optischen Netzwerkendgeräts, die Portnummer der Benutzernetzwerkschnittstelle UNI, die das Attribut des Nativen Virtuellen Lokalen Netzwerks konfigurieren muss, und das Tag des Nativen Virtuellen Lokalen Netzwerks; und
Senden einer Konfigurationsanforderungsnachricht des optischen Netzwerkendgeräts durch das Optische Leitungsendgerät OLT durch einen Verwaltungssteuerschnittstellenkanal optischer Netzwerkendgeräte, wobei die Konfigurationsanforderungsnachricht des optischen Netzwerkendgeräts Folgendes umfasst: die Identität des optischen Netzwerkendgeräts, die Portnummer der Benutzernetzwerkschnittstelle UNI, die das Attribut des Nativen Virtuellen Lokalen Netzwerks konfigurieren muss, und das Tag des Nativen Virtuellen Lokalen Netzwerks.

5. Verfahren nach einem der vorhergehenden Ansprüche, ferner mit dem folgenden Schritt:
Senden des Konfigurationsbefehls des Nativen Virtuellen Lokalen Netzwerks zu dem optischen Netzwerkendgerät, wobei der Konfigurationsbefehl des Nativen Virtuellen Lokalen Netzwerks Folgendes umfasst: die Identität des optischen Netzwerkendgeräts, die Portnummer der Benutzernetzwerkschnittstelle UNI, die mit dem Attribut des Nativen Virtuellen Lokalen Netzwerks konfiguriert werden muss, und das Tag des Nativen Virtuellen Lokalen Netzwerks.

6. Verfahren zur Verarbeitung von Ethernet-Nachrichten bei optischen Netzwerkendgeräten mit den folgenden Schritten:
das optische Netzwerkendgerät empfängt eine Ethernet-Nachricht von einer Benutzernetzwerkschnittstelle UNI und fügt ein in dem Attribut des Nativen Virtuellen Lokalen Netzwerks der Benutzernetzwerkschnittstelle UNI spezifiziertes Tag des Virtuellen Lokalen Netzwerks zu der Ethernet-Nachricht hinzu, bevor die Ethernet-Nachricht zu einem Protokollverarbeitungsmodul des Gigabit Passive Optical Network weitergeleitet wird, wenn die Ethernet-Nachricht kein Tag des Virtuellen Lokalen Netzwerks enthält; leitet andernfalls die Ethernet-Nachricht direkt zu dem Protokollverarbeitungsmodul des Gigabit Passive Optical Network weiter; und das optische Netzwerkendgerät empfängt die Ethernet-Nachricht mit dem Tag des Virtuellen Lokalen Netzwerks von dem Protokollverarbeitungsmodul des Gigabit Passive Optical Network und entfernt das Tag des Virtuellen Lokalen Netzwerks der Ethernet-Nachricht, bevor die Ethernet-Nachricht zu den mit der Benutzernetzwerkschnittstelle UNI verbundenen Geräten weitergeleitet wird, wenn das Tag des Virtuellen Lokalen Netzwerks der Ethernet-Nachricht dasselbe wie das in dem Attribut des Nativen Virtuellen Lokalen Netzwerks der Benutzernetzwerkschnittstelle UNI für die Ethernet-Nachricht spezifizierte ist; und leitet andernfalls die Ethernet-Nachricht direkt zu den mit der Benutzernetzwerkschnittstelle UNI verbundenen Geräten weiter.

7. Verfahren nach Anspruch 6, ferner mit dem folgenden Schritt:
das Konfigurationsendgerät konfiguriert die Benutzernetzwerkschnittstelle UNI mit dem Nativen Virtuellen Lokalen Netzwerk.

8. Verfahren nach einem der Ansprüche 6 bis 7, ferner mit den folgenden Schritten:
das optische Netzwerkendgerät bestimmt beim Empfang der Ethernet-Nachricht von der Benutzernetzwerkschnittstelle UNI, ob die Ethernet-Nachricht das Tag des Virtuellen Lokalen Netzwerks trägt, wenn die Ethernet-Nachricht das Tag des Virtuellen Lokalen Netzwerks trägt, ein Brückenmodul der Mediumzugangskontrolle in dem optischen Netzwerkendgerät leitet die Ethernet-Nachricht weiter; andernfalls fügt das Brückenmodul der Mediumzugangskontrolle in dem optischen Netzwerkendgerät das in dem Attribut des Nativen Virtuellen Lokalen Netzwerks der Benutzernetzwerkschnittstelle UNI, die die Ethernet-Nachricht empfängt, spezifizierte Tag des Virtuellen Lokalen Netzwerks zu der Ethernet-Nachricht hinzu; und
das Brückenmodul der Mediumzugangskontrolle sendet die Ethernet-Nachricht mit demselben und/oder einem anderen Tag des Virtuellen Lokalen Netzwerks über den integrierten Ethernet-Port zu dem Protokollverarbeitungsmodul des Gigabit Passive Optical Network und das Protokollverarbeitungsmodul des Gigabit Passive Optical Network fügt die notwendigen Protokollkopfteilinformationen des Gigabit Passive Optical Network zu der empfangenen Ethernet-Nachricht hinzu, erzeugt einen Rahmen des Gigabit Passive Optical Network und sendet ihn zu dem Optischen Leitungsendgerät OLT.

9. Verfahren nach einem der Ansprüche 6 bis 8, ferner mit den folgenden Schritten:
das Protokollverarbeitungsmodul des Gigabit Passive Optical Network entfernt die Protokollkopfteilinformationen des Gigabit Passive Optical Network beim Empfang der Dienstnachricht von dem Optischen Leitungsendgerät OLT, sendet die ursprüngliche Ethernet-Nachricht mit dem Tag des Virtuellen Lokalen Netzwerks über den integrierten Ethernet-Port zu dem Brückenmodul der Mediumzugangskontrolle des optischen Netzwerkendgeräts, das Brückenmodul der Mediumzugangskontrolle des optischen Netzwerkendgeräts vergleicht das Tag des Virtuellen Lokalen Netzwerks der empfangenen Ethernet-Nachricht mit dem in der Eigenschaft des Nativen Virtuellen Lokalen Netzwerks der Benutzernetzwerkschnittstelle UNI für die Ethernet-Nachricht spezifizierten Tag des Virtuellen Lokalen Netzwerks und leitet die Ethernet-Nachricht direkt zu den mit der Benutzernetzwerkschnittstelle UNI verbundenen Geräten für die Ethernet-Nachricht weiter, wenn die beiden Tags nicht gleich sind, und entfernt andernfalls das Tag des Virtuellen Lokalen Netzwerks der Ethernet-Nachricht, bevor es sie zu den mit der Benutzernetzwerkschnittstelle UNI für die Ethernet-Nachricht verbundenen Geräten sendet.

## Revendications

1. Procédé de configuration d'un réseau local virtuel natif pour un système de réseau optique passif dans le domaine du gigabit, GPON, comprenant :
l'envoi d'une instruction de configuration de réseau local virtuel natif vers un terminal de réseau optique grâce à un terminal de configuration, et
la mémorisation d'au moins un attribut de réseau local virtuel natif dans une entité de gestion de données de configuration de fonctionnement balisé de réseau local virtuel, ainsi que le renvoi d'un message de réponse à la configuration grâce au terminal de réseau optique, dans lequel,
lorsqu'une interface utilisateur de réseau, UNI, configurée par des attributs de réseau local virtuel natif, reçoit des trames Ethernet en provenance de dispositifs connectés, une balise du réseau local virtuel dans l'attribut de réseau local virtuel natif est ajoutée à des trames non balisées et des trames balisées de réseau local virtuel sont transférées directement grâce à un module de passerelle de la couche de commande d'accès au support, MAC ; et lorsqu'une interface utilisateur du réseau, UNI, configurée par les attributs de réseau local virtuel natif, reçoit des trames Ethernet de liaison descendante, la balise de réseau local virtuel est supprimée pour les trames comportant la balise du réseau local virtuel équivalente à la valeur de l'attribut de réseau local virtuel natif avant que les trames soient envoyées vers des dispositifs connectés par l'intermédiaire du module de passerelle de couche MAC, les trames comportant une balise de réseau local virtuel différente de la valeur de l'attribut de réseau local virtuel natif étant transférées directement par l'intermédiaire du module de passerelle de couche MAC.

2. Procédé selon la revendication 1, dans lequel l'instruction de configuration du réseau local virtuel natif comprend une identité du terminal de réseau optique, un numéro de port pour une interface utilisateur du réseau, UNI, qui doit être configurée grâce à l'attribut de réseau local virtuel natif, ainsi qu'une balise du réseau local virtuel natif.

3. Procédé selon l'une des revendications précédentes, dans lequel l'attribut de réseau local virtuel natif indique qu'une balise préconfigurée du réseau local virtuel sera établie pour un port Ethernet configuré grâce à l'attribut du réseau local virtuel natif.

4. Procédé selon l'une des revendications précédentes, comprenant en outre :
l'envoi, grâce au terminal de configuration, de l'instruction de configuration de réseau local virtuel natif vers un terminal optique de ligne, OLT, l'instruction de configuration de réseau local virtuel natif comprenant l'identité du terminal de réseau optique, le numéro de port de l'interface utilisateur de réseau, UNI, qui doit configurer l'attribut de réseau local virtuel natif, ainsi que la balise du réseau local virtuel natif, et
l'envoi par le terminal optique de ligne, OLT, d'un message de demande de configuration de terminal de réseau optique, par l'intermédiaire d'un canal interface de commande de gestion de terminaux de réseau optique, dans lequel le message de demande de configuration de terminal de réseau optique comprend l'identité du terminal de réseau optique, le numéro de port de l'interface utilisateur du réseau, UNI, qui doit configurer l'attribut de réseau local virtuel natif ainsi que la balise de réseau local virtuel natif.

5. Procédé selon l'une des revendications précédentes, comprenant en outre :
l'envoi de l'instruction de configuration du réseau local virtuel natif au terminal de réseau optique, dans lequel l'instruction de configuration de réseau local virtuel natif comprend l'identité du terminal de réseau optique, le numéro de port de l'interface utilisateur du réseau, UNI, qui doit être configurée grâce à l'attribut de réseau local virtuel natif, ainsi que la balise de réseau local virtuel natif.

6. Procédé pour traiter des messages Ethernet à l'aide d'un terminal de réseau optique, comprenant :
la réception, par un terminal de réseau optique, d'un message Ethernet provenant d'une interface utilisateur du réseau, UNI, et, si le message Ethernet ne contient pas de balise de réseau local virtuel, l'ajout au message Ethernet d'une balise de réseau local virtuel spécifiée dans l'attribut de réseau local virtuel natif de l'interface utilisateur du réseau, UNI, avant le transfert du message Ethernet vers un module de traitement de protocole de réseau optique passif dans le domaine du gigabit ; sinon, le transfert direct du message Ethernet vers le module de traitement de protocole de réseau optique passif dans le domaine du gigabit; et la réception par le terminal de réseau optique du message Ethernet comportant la balise de réseau local virtuel en provenance du module de traitement de protocole de réseau optique passif dans le domaine du gigabit ; et, si l'étiquette de réseau local virtuel du message Ethernet est identique à celle spécifiée dans l'attribut de réseau local virtuel natif de l'interface utilisateur du réseau, UNI, pour le message Ethernet, la suppression de la balise de réseau local virtuel du message Ethernet avant le transfert du message Ethernet vers l'équipement connecté à l'interface utilisateur du réseau, UNI ; sinon, le transfert direct du message Ethernet vers l'équipement connecté à l'interface utilisateur du réseau, UNI.

7. Procédé selon la revendication 6, comprenant en outre :
la configuration, par le terminal de configuration, de l'interface utilisateur du réseau, UNI, grâce au réseau local virtuel natif.

8. Procédé selon l'une des revendications 6 et 7, comprenant en outre :
la détermination, par le terminal de réseau optique, lors de la réception du message Ethernet provenant de l'interface utilisateur du réseau, UNI, du fait que le message Ethernet transporte ou non la balise de réseau local virtuel, si le message Ethernet transporte la balise de réseau local virtuel, un module de passerelle de la couche de commande d'accès au support dans le terminal de réseau optique transférant le message Ethernet ; sinon, le module de passerelle de la couche de commande d'accès au support dans le terminal de réseau optique ajoutant au message Ethernet la balise de réseau local virtuel spécifiée dans l'attribut de réseau local virtuel natif de l'interface utilisateur du réseau, UNI, qui reçoit le message Ethernet, et
l'envoi, par le module de passerelle de la couche de commande d'accès au support, du message Ethernet comportant une balise identique et/ou différente de réseau local virtuel vers le module de traitement de protocole de réseau optique passif dans le domaine du gigabit par l'intermédiaire du port Ethernet intégré, ainsi que l'ajout au message Ethernet reçu, par le module de traitement de protocole de réseau optique passif dans le domaine du gigabit, des informations nécessaires d'en-tête de protocole de réseau optique passif dans le domaine du gigabit, la génération d'une trame de réseau optique passif dans le domaine du gigabit et l'envoi de celle-ci vers le terminal optique de ligne, OLT.

9. Procédé selon l'une des revendications 6 à 8, comprenant en outre :
la suppression, par le module de traitement de protocole de réseau optique passif dans le domaine du gigabit, des informations d'en-tête de protocole de réseau optique passif dans le domaine du gigabit à la réception du message de service provenant du terminal optique de ligne, OLT, l'envoi du message Ethernet d'origine comportant la balise de réseau local virtuel vers le module de passerelle de la couche de commande d'accès au support du terminal de réseau optique par l'intermédiaire du port Ethernet intégré, le module de passerelle de la couche de commande d'accès au support du terminal de réseau optique comparant la balise de réseau local virtuel du message Ethernet reçu à la balise de réseau local virtuel spécifiée dans la propriété du réseau local virtuel natif de l'interface utilisateur du réseau, UNI, pour le message Ethernet, et, si les deux balises sont différentes, le transfert direct du message Ethernet vers l'équipement connecté à l'interface utilisateur du réseau, UNI, pour le message Ethernet et, si ce n'est pas le cas, la suppression de la balise de réseau local virtuel du message Ethernet avant de l'envoyer vers l'équipement connecté à l'interface utilisateur du réseau, UNI, pour le message Ethernet.
